Europäisches Patentamt

European Patent Office

Office européen des brevets

(11) Veröffentlichungsnummer : **0 170 807**
**B1**

(12) **EUROPÄISCHE PATENTSCHRIFT**

(45) Veröffentlichungstag der Patentschrift :
20.01.88

(21) Anmeldenummer : 85106426.1

(22) Anmeldetag : 24.05.85

(51) Int. Cl.⁴ : **B 60 K 20/10**, F 16 H   5/74

(54) **Hilfskraftbetätigtes Fahrzeuggetriebe.**

(30) Priorität : 10.08.84 DE 3429531

(43) Veröffentlichungstag der Anmeldung :
12.02.86 Patentblatt 86/07

(45) Bekanntmachung des Hinweises auf die Patenterteilung : 20.01.88 Patentblatt 88/03

(84) Benannte Vertragsstaaten :
DE FR GB SE

(56) Entgegenhaltungen :
EP-A- 0 065 824
EP-A- 0 107 761
GB-A- 1 405 905
GB-A- 2 129 509
US-A- 4 425 620

(73) Patentinhaber : WABCO Westinghouse Fahrzeugbremsen GmbH
Am Lindener Hafen 21 Postfach 91 12 80
D-3000 Hannover 91 (DE)

(72) Erfinder : Klatt, Alfred, Ing. grad.
Dannhorstweg 25
D-3101 Wathlingen (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

## Beschreibung

Die Erfindung bezieht sich auf ein hilfskraftbetätigtes Fahrzeuggetriebe gemäß dem Oberbegriff des Patentanspruchs 1.

Hilfskraftbetätigte halbautomatische oder automatische Getriebebetätigungen für konventionelle Synchron- oder Klauengetriebe weisen in der Regel mehrere Gassenstellungen auf, von denen aus jeweils mindestens ein, in der Regel aber zwei Gänge angewählt werden können. Diese Gassen-Anwahlstellungen werden auch als Neutralstellung bezeichnet.

Zur automatischen Gangwahl werden solche Getriebe mit einer Gassen- und einer Gangwahleinrichtung ausgestattet. Diese beiden Einrichtungen werden bei einem Gangwechsel in festgelegter Reihenfolge so nacheinander geschaltet, daß jeder beliebige Gang aus jedem anderen beliebigen Gang anwählbar ist. Die Wahl eines Ganges wird von einer Kontroll-Elektronik nur dann nicht zugelassen, wenn dies eine unzulässige Motordrehzahl bedeuten würde. Die Betätigung des Getriebes erfolgt dabei meist mittels druckmittelbetätigter Arbeitszylinder. Es können aber auch andere, z. B. elektrische Betätigungen erfolgen.

Weiterhin sind auch die Neutralstellungen aus jedem beliebigen Gang schaltbar und jeder Gang ist aus einer beliebigen Neutralstellung schaltbar.

Eine hilfskraftbetätigte Schalteinrichtung der eingangs beschriebenen Art für ein Kraftfahrzeug mit rechtwinklig zueinander gelegenen Gassen- und Gangzylindern ist aus der GB-A-1 405 905 bekannt. In dieser Schalteinrichtung werden die Gänge mit variabler Kraft eingelegt, und zwar zuerst langsam zur Synchronisation, und anschließend schnell. Dies erleichtert die Schaltvorgänge und macht die Schaltung insgesamt schneller.

Wird die Wahl der Funktion « Neutral » mit einem vom Fahrer zu bedienenden Geber vorgenommen, der nur eine Neutralstellung bietet, ist es unbestimmt, welcher Gasse die dann tatsächlich eingenommene Neutralstellung am Getriebe zugeordnet ist. In der Neutralstellung des Schalthebels ist also die Stellung des Gassenzylinders, der z. B. ein Dreistellungs-Zylinder sein kann, nicht festgelegt. Im Normalfall verbleibt der Gassenzylinder in der Gasse des zuletzt eingelegten Ganges. Diese Situation tritt in gleicher Weise auch bei einer automatischen Neutralwahl auf.

Wird nun aus einer bestimmten Neutralstellung des Getriebes heraus ein Gang angewählt, der nicht in der gleichen Gasse liegt, in der die Neutralstellung gelegen hatte, muß zunächst die neue Gasse angewählt werden. Hierdurch entsteht in bestimmten Fahrsituationen ein Zeitverzug, der sich negativ auf die Gesamt-Umschaltzeit des Getriebes auswirkt.

Wird beispielsweise das Fahrzeug aus dem Stand angefahren, und liegt die gerade eingelegte Gasse nicht zufällig vor dem zum Anfahren benutzten Gang, dann ist zunächst der erwähnte Gassenwechsel erforderlich.

Das gleiche gilt dann, wenn der Fahrer während der Fahrt zunächst nur auf Neutral schaltet, das Fahrzeug eine Strecke rollen läßt und erst dann in einen neuen Gang schaltet, der einen Gassenwechsel erfordert.

Außerdem kann die unbestimmte Gassenwahl auch ein Sicherheitsrisiko in bezug auf Schaltfehler bedeuten. Wird beispielsweise mit größerer Geschwindigkeit gefahren, dann sollte durch die Automatik auf keinen Fall die Neutralstellung in der Rückwärtsgang-Gasse eingelegt werden können, um das ungewollte Einlegen des Rückwärtsganges während der Fahrt vollkommen auszuschließen.

Der Erfindung liegt die Aufgabe zugrunde, eine sinnvolle Gassenwahl für die Neutralstellung anzugeben, die Schaltverzögerungen verhindert und Sicherheit gegen Verschalten bietet.

Diese Aufgabe wird durch die im Patentanspruch 1 enthaltene Erfindung gelöst. Die Unteransprüche enthalten zweckmäßige Weiterbildungen der Erfindung.

Durch die Erfindung erfolgt eine automatische, geschwindigkeitsabhängige Gassen-Vorwahl während der Fahrt bei Neutral-Stellung des Schalthebels.

Die Erfindung wird im folgenden anhand einer Zeichnung näher erläutert.

Die Zeichnung zeigt in

Fig. 1 ein Blockschaltbild einer Getriebesteuerung für ein Nutzfahrzeug und in

Fig. 2 ein Diagramm der Gassen-Anwahl in Abhängigkeit zur Fahrzeuggeschwindigkeit.

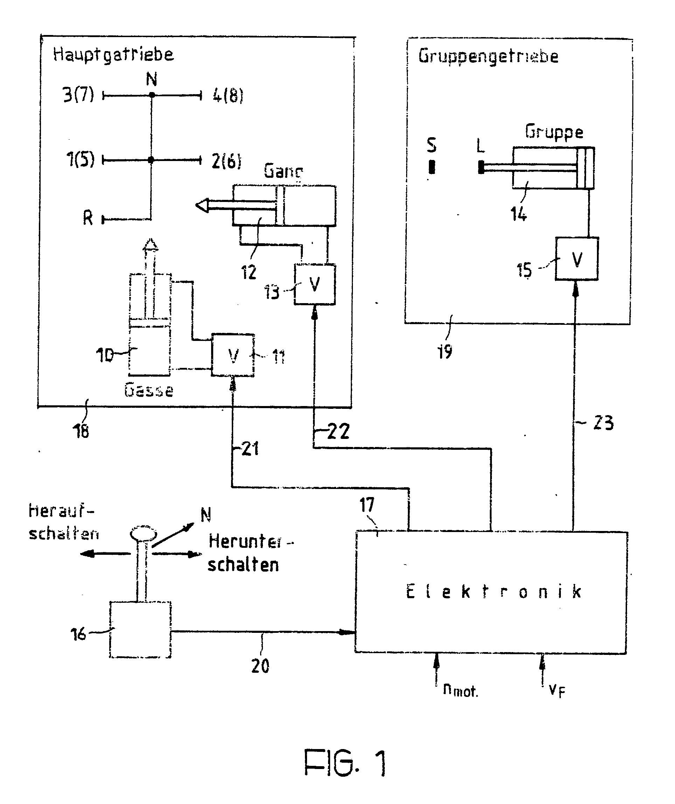

In Fig. 1 ist mit 18 das Hauptgetriebe und mit 19 das Gruppengetriebe eines Nutzfahrzeugs bezeichnet. Das Hauptgetriebe 18 läßt sich in fünf Stellungen schalten, und zwar in den Rückwärtsgang R sowie in die Vorwärtsgänge 1 bis 4. Als weitere Stellung ist die Neutralstellung N möglich. Diese kann in drei verschiedenen Gassen liegen, nämlich vor den Gängen 3/4, 1/2, oder vor dem Rückwärtsgang R. Die Einstellung der jeweiligen Gasse erfolgt mittels eines Dreistellungs-Gassenzylinders 10, der mittels einer Ventileinrichtung 11 gesteuert wird. Die Einstellung der Vorwärtsgänge und des Rückwärtsganges erfolgt durch einen Dreistellungs-Gangzylinder 12, der durch eine weitere Ventileinrichtung 13 gesteuert wird.

Zur Verdoppelung der Anzahl der Vorwärtsgänge dient ein Gruppengetriebe 19. Dieses besitzt einen Zweistellungs-Gruppenzylinder 14, der durch eine Ventileinrichtung 15 betätigt wird. Der Zylinder 14 ist in die Gangstellung L für die Gänge 1 bis 4 und in die Gangstellung S für die Gänge 5 bis 8 schaltbar. Die den Gängen 5 bis 8 zugeordneten Stellungen des Hauptgetriebes 18 sind durch eingeklammerte Ziffern angegeben.

Die Druckmittelanschlüsse für die Ventileinrichtungen 11, 13, 15 zur Steuerung der Arbeitszylinder 10, 12, 14 sind der Einfachheit halber nicht dargestellt.

Die Ventileinrichtungen 11, 13, 15 sind als Magnetventile ausgebildet und werden über elektrische Steuerleitungen 21, 22, 23 durch eine Elektronik 17 angesteuert.

Zum Einlegen der Gänge durch den Fahrer dient eine Schalteinrichtung 16. Diese weist einen Schalthebel auf, der in die drei Stellungen « Herausschalten », « Herunterschalten » und « Neutral » (N) bewegbar ist. Die jeweiligen Stellungen des Schalthebels werden über eine Leitung 20 der Elektronik 17 mitgeteilt. Der Elektronik 17 werden weiter die Motordrehzahl $n_{Mot}$ sowie die Fahrzeuggeschwindigkeit $v_F$ mitgeteilt.

Die Elektronik 17 bestimmt aus den ihr zugeleiteten Informationen einen günstigen Gang und bewirkt durch Ansteuerung der Ventileinrichtungen 11, 13, 15 dessen Einlegung.

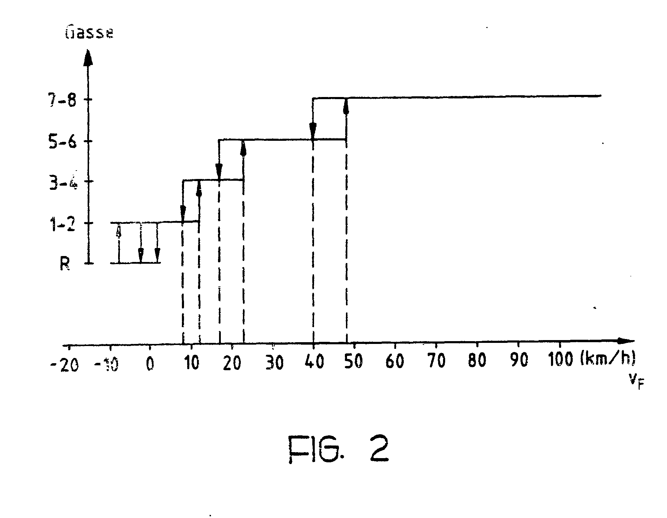

Die Elektronik 17 enthält weiterhin in einem (nicht dargestellten) Speicher eine Zuordnung der Lage der jeweiligen Neutralstellung zur jeweiligen Fahrzeuggeschwindigkeit $v_F$. Diese ist in der Fig. 2 genauer dargestellt.

Wie man aus der Fig. 2 erkennt, ist bei Anwendung der Erfindung die Lage der Neutralstellung nicht zufällig, sondern hängt von der jeweiligen Geschwindigkeit des Fahrzeuges ab. Fährt das Fahrzeug beispielsweise schneller als ca. 50 km/h im Neutral-Bereich, wird stets die Neutralstellung in der Gasse 7/8 bzw. 3/4 eingenommen. Im Geschwindigkeitsbereich von etwa 20 bis 50 km/h wird die Gasse vor den Gängen 5/6 bzw. 1/2 eingenommen. Im Bereich von etwa 10 bis 20 km/h wird die Gasse vor den Gängen 3/4 bzw. 7/8 eingenommen. Im Bereich von etwa 0 bis 10 km/h wird die Gasse vor den Gängen 1/2 bzw. 5/6 eingenommen.

Das Gruppengetriebe 19 wird an den gleichen Schwellen wie das Hauptgetriebe 18 umgeschaltet, und zwar bei Geschwindigkeiten größer als ca. 20 km/h in die Stellung S und Geschwindigkeiten unterhalb von ca. 20 km/h in die Stellung L.

Der Rückwärtsgang R ist nur in einem schmalen Bereich nahe der Fahrzeuggeschwindigkeit $v_F = 0$ einlegbar. Wird der Rückwärtsgang während der Rückwärtsfahrt herausgenommen (in Fig. 2 bei etwa — 7 km/h), so wird stets die Gasse vor den Gängen 1/2 bzw. 5/6 eingenommen.

Wie man aus der Fig. 2 weiter erkennt, erfolgt das Hochschalten der Gasse in der Neutralstellung bei einer höheren Fahrzeuggeschwindigkeit als das Herunterschalten der Gasse. Diese Hysterese ist notwendig, damit es bei einer bestimmten Fahrzeuggeschwindigkeit nicht zu einem ständigen Umschalten der Gassen kommt.

Fährt beispielsweise das Fahrzeug im Leerlauf, d. h. in der Neutralstellung des Ganghebels, ein Gefälle herunter, und beschleunigt das Fahrzeug hierbei, dann erfolgt der Gassenwechsel von der Gasse 5/6 zur Gasse 7/8 bei etwa 48 km/h.

Im umgekehrten Fall, d. h. wenn das Fahrzeug im Leerlauf verzögert, beispielsweise in einer längeren Schaltpause während einer Bergauffahrt, erfolgt das Umschalten von der Gasse 7/8 in die Gasse 5/6 erst bei einer Geschwindigkeit von 40 km/h.

Fährt das Fahrzeug aus dem Stand heraus an, so legt die Elektronik 17 vor dem Anfahren stets die Gasse vor den Gängen 1/2 ein. Will der Fahrer anfahren, so betätigt er den Schalthebel in Richtung « Heraufschalten », und der erste Gang wird von der Elektronik 17 eingelegt. Es wird also die Zeit eingespart, die notwendig wäre, den Gassenzylinder zu betätigen, wenn die Gasse beispielsweise vor den Gängen 3/4 gelegen hätte.

Die beschriebene Gassenwahl ist besonders vorteilhaft und nützlich bei einem Getriebe, das zum Anfahren in Abhängigkeit vom Fahrzeuggewicht den passenden Gang selbständig auswählt. In einem solchen Fall kann beispielsweise auch die Gasse vor den Gängen 3/4 ausgewählt werden, wenn das Fahrzeug unbeladen ist und somit im dritten Gang besonders sparsam angefahren werden kann.

**Patentansprüche**

1. Hilfskraftbetätigtes Fahrzeuggetriebe mit voll- oder halbautomatischer Steuerung, dessen Gänge mittels eines Gassenzylinders, eines Gruppenzylinders und eines oder mehrerer Gangzylinder einlegbar sind, gekennzeichnet durch eine Elektronik (17), in der Drehzahl- oder Geschwindigkeitsbereiche festgelegt sind, denen bestimmte Gassen und Gruppengänge zugeordnet sind, und die diese Gassen und Gruppengänge nach dem Einlegen der Neutralstellung (N) durch Ansteuerung des Gassenzylinders (10) bzw. des Gruppenzylinders (14) vorwählt.

2. Fahrzeuggetriebe nach Anspruch 1, dadurch gekennzeichnet, daß die Vorwahl einer neuen Gasse bei steigender Fahrzeuggeschwindigkeit $v_F$ bei einer höheren Geschwindigkeit erfolgt als bei sinkender Fahrzeuggeschwindigkeit.

3. Fahrzeuggetriebe nach Anspruch 1 bis 2, dadurch gekennzeichnet, daß die Gasse für den Rückwärtsgang (R) nur innerhalb eines schmalen Bereichs in der Nähe der Fahrzeuggeschwindigkeit $v_F = 0$ anwählbar ist.

4. Fahrzeuggetriebe nach Anspruch 1 bis 3, dadurch gekennzeichnet, daß die Umschaltung des Gruppenzylinders (14) nach dem Einlegen der Neutralstellung (N) an den gleichen Geschwindigkeitsschwellen erfolgt wie das Umschalten der Gassen.

5. Fahrzeuggetriebe nach Anspruch 1 bis 4, dadurch gekennzeichnet, daß bei stehendem Fahrzeug ohne Beladung eine höhere Gasse vorwählbar ist als mit Beladung.

**Claims**

1. Power-assisted vehicle transmission having fully or semi-automatic control, the gears of which can be engaged by means of a gear-path cylinder, a group cylinder and one or more gear cylinders, characterised by an electronic device (17) in which engine or vehicle speed ranges are fixed, with which ranges specific gear-paths and group gears are associated, and which preselects these gear-paths and group gears once the neutral position (N) has been engaged by operation of the gear-path cylinder (10) or the group cylinder (14).

2. Vehicle transmission according to claim 1, characterised in that the preselection of a new path in the case of rising vehicle speed $v_F$ takes place at a higher speed than in the case of falling vehicle speed.

3. Vehicle transmission according to claims 1 and 2, characterised in that the gear-path for the reverse gear (R) can be selected only within a narrow range in the vicinity of the vehicle speed $v_F = 0$.

4. Vehicle transmission according to claims 1 to 3, characterised in that the switching-over of the group cylinder (14) once the neutral position (N) has been engaged takes place at the same speed thresholds as does the switching-over of the gear-paths.

5. Vehicle transmission according to claims 1 to 4, characterised in that in the case of an unladen stationary vehicle a higher gear-path can be preselected than in the case of a laden vehicle.

## Revendications

1. Boîte de vitesses pour véhicule, assistée par une force auxiliaire, à commande entièrement automatique ou semi-automatique, dont les rapports peuvent être enclenchés au moyen d'un vérin de sélection des coulisseaux, d'un vérin de boîte de réduction et d'un ou plusieurs vérin(s) d'enclenchement ou de sélection des rapports, caractérisée par une commande électronique (17) dans laquelle sont enregistrés des intervalles de valeurs du régime et de la vitesse de roulement du véhicule, auxquels correspondent des coulisseaux donnés et des rapports donnés de la boîte de réduction, et qui présélectionnent ces coulisseaux et ces rapports de réduction après la sélection de la position de point mort (M) par commande du vérin de sélection des coulisseaux (10) et du vérin (14) de la boîte de réduction respectivement.

2. Boîte de vitesses pour véhicule selon la revendication 1, caractérisée en ce que la présélection d'un nouveau coulisseau se produit à une vitesse de roulement du véhicule ($v_F$) plus élevée lorsque la vitesse du véhicule s'accroît que lorsque cette vitesse décroît.

3. Boîte de vitesses pour véhicule selon les revendications 1 et 2, caractérisée en ce que le coulisseau correspondant à la marche arrière (R) ne peut être sélectionné que dans un petit intervalle de valeurs de la vitesse, situé dans le voisinage de vitesse de roulement du véhicule $v_F = 0$.

4. Boîte de vitesses pour véhicule selon les revendications 1 à 3, caractérisée en ce que la manœuvre du vérin (14) de la boîte de réduction se produit après la sélection de la position de point mort (M) aux mêmes seuils de vitesse que la sélection des coulisseaux.

5. Boîte de vitesses pour véhicule selon les revendications 1 à 4, caractérisée en ce que, lorsque le véhicule est à l'arrêt à vide, on peut présélectionner un coulisseau correspondant à des rapports plus élevés que dans le cas où le véhicule est chargé.

FIG. 1

FIG. 2